# EUROPEAN PATENT APPLICATION

(11) **EP 4 046 589 A1**
(43) Date of publication of application: **24.08.2022**
(21) Application number: 21158671.4
(22) Date of filing: 23.02.2021
(51) Int. Cl.: A61C 8/00

(54) **DENTAL IMPLANT ASSEMBLIES, TOOLS THEREFOR AND KIT**

(71) Applicant: Rostami, Edwin, 0012 Yerevan (AM)
(72) Inventor: Rostami, Edwin, 0012 Yerevan (AM)
(74) Representative: ZBM Patents - Zea, Barlocci & Markvardsen

(57) **Abstract**

A dental implant assembly comprising a supporting element, and an annular bone replacement element attached to the supporting element surrounding a portion thereof, wherein the annular bone replacement element is formed of a bioresorbable material and comprises a central portion defining a substantially cylindrical lateral surface, a first protuberance and a second protuberance.

## Description

This invention relates to the field of dental surgery and more particularly to bone implants for use in dentate maxillary and dentate mandibular bones.

### BACKGROUND ART

Dental implants are known and used in the replacement of damaged or missing teeth. Generally, an anchoring element is first provided in the bone, inside of which an artificial replacement tooth may be positioned.

In some cases, a discontinuity in the dentate bones due to, e.g., damage to the dental bones may result in missing or eroded bone mass. This poses an impediment to the placement of the artificial tooth or teeth as there is no mass within which the implant may be supported or anchored. Thus, in these cases it may be necessary to first rebuild or fill a bone area, not only to restore the normal bone structure but also as a means to provide support for the prosthetic tooth or teeth.

However, known bone fillers, generally referred to as bone rings, are generally provided as an 'add-on' element that is separate from the implant (or anchor) element. Thus, they must be manually handled and attached to the implant (anchor screw in) part by the dental or orthodontic surgeon. As such, the assembly and placement thereof can be difficult and cumbersome, requiring high dexterity and specialized training. The result is that only specially trained professionals may use the known implants and bone fillers. It is not uncommon for even the most proficient surgeons to accidentally drop the bone ring when attempting to attach it to the implant; in which case the part must be discarded in compliance with medical sanitary standards. Moreover, as these are parts that are generally supplied separately, they are each provided in their own separate packaging and each element may require a separate sterilization process. The training and handling requirements may increase the total cost of the treatment.

Moreover, known dental fillers (bone rings) are provided in a standard cylindrical shape which may disregard the anatomical aspect and biological environment of the dental structure and tissue where the bone filler part is to be placed. This may hinder vascularization and osseointegration of the implant.

Also, known dental implants are provided as separate parts which have to be assembled by the dental surgeon at the time of placement.

### SUMMARY

Dental implant assemblies and tools therefor are provided which facilitate placement of a dental implant and which may improve the quality of healing and integration and accelerate healing time. A kit of parts comprising a dental implant assembly and a tool for preparing a dentate bone surface area for dental implant placement is also provided.

In examples, a dental implant assembly is provided, the dental implant comprising a supporting element, and an annular bone replacement element attached to the supporting element surrounding a portion thereof, wherein the annular bone replacement element is formed of a bioresorbable material and comprises a central portion defining a substantially cylindrical lateral surface, a first protuberance defining an upper terminus surface of the bone replacement element and extending between an upper outer edge and an upper inner edge of the central portion, a second protuberance defining a lower terminus surface of the bone replacement element and extending between a lower outer edge and a lower inner edge of the central portion, and a substantially cylindrical opening extending longitudinally through the central portion and the first and second protuberances, wherein the supporting element is partially arranged inside the opening, and wherein the first and second protuberances comprise a first height profile defined by a height which increases gradually from a minimum height at substantially the upper and lower outer edges, respectively, of the bone replacement element to a maximum height at a point of maximum height of the first profile between the upper and lower outer edges, respectively, and the opening of the bone replacement element, and wherein a maximum circumference of the central portion is greater than a maximum circumference of each of the first and second protuberances.

The terms inner edge and outer edge of the bone replacement element as used herein refer to the substantially circular or circumferential interior and external extension of the bone replacement element at an upper and lower area thereof. The opening and the central portion and protuberances are co-axial, thus having a common central longitudinal axis.

A tool for preparing a surface area of a dentate mandibular bone or dentate maxillary bone for a dental implant is also provided, the tool comprising an attachment element for attaching the tool to a handling piece with actuation means at a first end of the attachment element, a bone surface shaping element rotatably attached around a second end of the attachment element, the second end being longitudinally opposite to the first end of the attachment element, wherein the shaping element is arranged to rotate upon actuation of the tool and is formed of a material having a material hardness of 10 or greater on the Mohs scale of mineral hardness, and an elongated tool positioning element projecting from the center of the lower surface of the bone shaping element for insertion into a bone to be prepared for a dental implant.

A kit of parts is also provided, the kit of parts comprising a dental implant assembly and a tool as described herein.

### DESCRIPTION OF THE DRAWINGS

Non-limiting examples of the present disclosure will be described in the following, with reference to the appended drawings, in which:
Figures 1A-1E show schematic depictions of several views of a dental implant assembly 100 according to an aspect of the invention.
Figure 1F is a schematic depiction of a dental implant according to the invention in an implanted position.
Figure 2 shows a schematic depiction of an example height profile of a bone replacement element according to the invention.
Figure 3 is a schematic depiction of an example height profile of a bone replacement element according to the invention.
Figure 4 is a schematic depiction of an example height profile of a bone replacement element according to the invention.
Figure 5 is a schematic depiction of an example height profile of a bone replacement element according to the invention.
Figure 6A shows an example of a tool 600 according to an aspect of the invention.
Figure 6B shows an example of a dental bone area that has been prepared with a tool according to the invention for implant of a dental implant assembly according to the invention.

### DETAILED DESCRIPTION

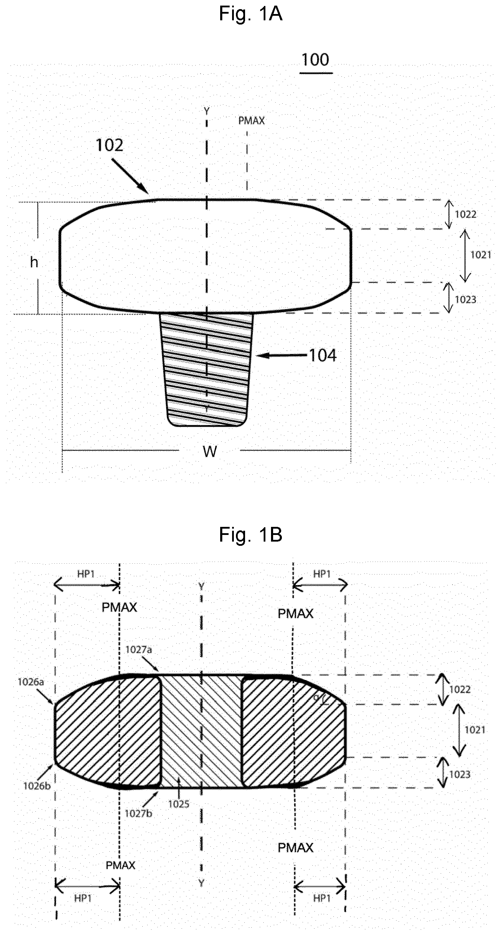

Figures 1A-1F schematically illustrate different views and different examples of a dental implant assembly 100.

The dental implant assembly 100 is described herein with reference to a central vertical axis Y defining the longitudinal axis of the dental implant assembly 100 and a horizontal axis X as shown in Figure 1A.

As shown in the front view in Fig. 1A, the dental implant assembly 100 comprises a bone replacement element 102 and a supporting element 104.

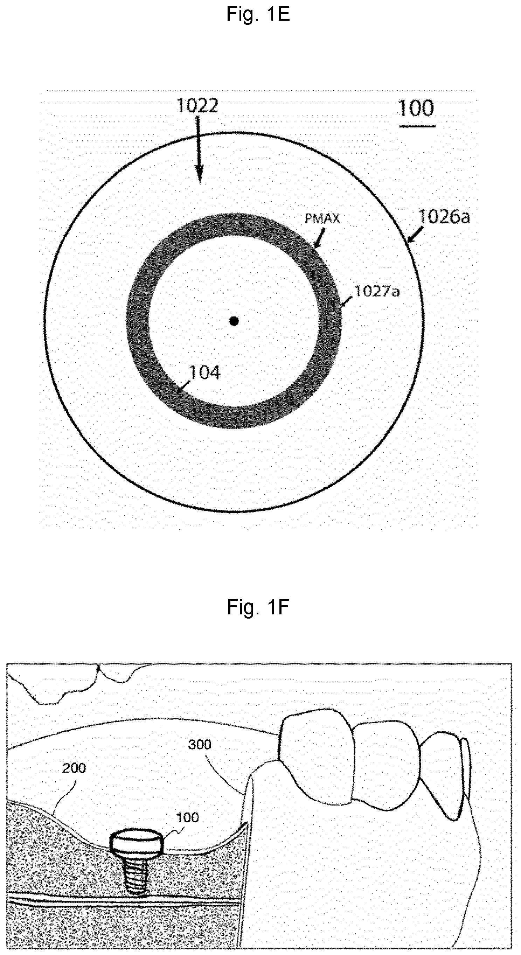

The bone replacement element 102 surrounds the supporting element 104 along a partial lengthwise extension thereof. The supporting element 104 may comprise, for example, a titanium screw such as a medical grade titanium screw. In use, the supporting element 104 supports the dental implant assembly on a bone. The supporting element 104 may also provide a grip on the surrounding tissue. In some examples, the supporting element 104 comprises a socket 1041 (an example of which is shown in the top view in Fig.1E) for receiving a dental prosthesis. For example, an abutment may be inserted into the socket 1041 for placing a dental prosthesis.

The bone replacement element 102 comprises a bioresorbable material. Bioresorbable material as referred to herein refers to any material that may be naturally absorbed by the body. In examples, the bone replacement element 102 comprises at least 90% bioresorbable material. In examples, the bone replacement 102 comprises 100% bioresorbable material, therefore being formed entirely of a bioresorbable material. The bioresorbable material may comprise, for example, allograft, xenograft, synthetic materials (such as hydroxyapatite-polyglycolic acid (HA-PGA), etc.). The bioresorbable material in the bone replacement element 102 may advantageously accelerate the healing process and enhance the anatomical integration of the implant. The bioresorbable material in the bone replacement element 102 may also promote vascularization and osseointegration of the implant. Additionally, the bioresorbable material of the bone replacement element 102 may stimulate bone regeneration (i.e., bone regrowth) within the surrounding area and within the bone replacement element 102 itself. Bone formation and vascularization may thus occur within the porous bioresorbable material and around the bone replacement element 102. This may increase the stability of the dental implant assembly 100 within the dentate bone. It should be noted that due to the nature of the bioresorbable material, which may be porous, in practice, the geometric shapes or forms of the elements described herein may be approximations and may not necessarily conform perfectly to the nominal geometrical forms used herein for descriptive purposes. For example, in practice, the substantially cylindrical lateral surface of the bone replacement element may, in some instances, not conform perfectly to a cylindrical geometric shape at a microscopic level due to, e.g., the porosity of the material or imperfections in the material.

The bone replacement element 102 comprises a central portion 1021, a first (or upper) protuberance 1022, and a second (or lower) protuberance 1023. The central portion 1021 defines a substantially cylindrical lateral surface of the bone replacement element 102, while the protuberances define the upper and lower terminus (end) surfaces of the bone replacement element 102. The first protuberance (1022) may be alternatively referred to as the upper protuberance in view of its relative position to the central portion 1021 on the illustrative vertical axis Y. The second protuberance (1023) may be alternatively referred to as the lower protuberance in view of its relative position to the central portion 1021 on the illustrative vertical axis Y. The terms 'upper' and 'lower' as used throughout this description (e.g., with respect to the protuberances and the terminus surfaces), are used for ease of reference and do not entail that the part or the dental implant assembly must be necessarily provided in any particular orientation during use or otherwise.

The first and second protuberances (1022, 1023) comprise a first profile height portion (HP1) defined by the height of the protuberances increasing gradually from a minimum height (Hmin) at the upper and lower outer edges (1026 a, b) (for the first protuberance and the second protuberance respectively) of the bone replacement element (102), to a maximum height (Hmax) between the upper and lower outer edges (1026a,b) (for the first protuberance and for the second protuberance respectively) of the bone replacement element (102) and the opening (1025).

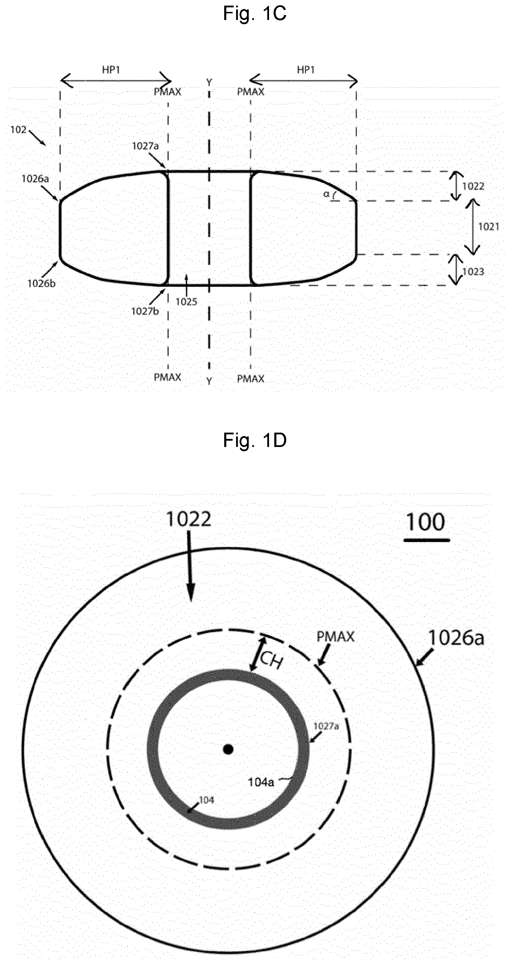

The point of maximum height may be referred to as 'point of (Hmax)' or (Pmax), and examples of the location (i.e., between the outer edges and the opening) of the point of (Hmax) on the height profile of the protuberance are shown in Figures 1C and 1D. The location of the maximum height of the profile (which is also the maximum height of each protuberance) may be interchangeably referred to as the point of maximum height or the plane of maximum height (Pmax). Examples of the location of the point or plane (Pmax) are also shown in Figure 1E.

The term height as used herein refers to the extension of the protuberances as seen on a cross-section through a reference vertical plane as shown in the figures. As the height is described in the context of a height profile (in the sense of a side view as obtained through a vertical cross-section of the bone replacement element (102)), the locations of the minimum and maximum heights are referred to as points. However, it will be clear that the protuberances are tri-dimensional, and a particular height thereof extends along an entire circumference thereof which may be referred to as a circumferential plane. Examples of such circumferential planes are shown in the views in Figure 1D and Figure 1E, which are top views corresponding to the examples in Figures 1B and 1C, respectively, and show a location of the planes of minimum and maximum height (Pmin) and (Pmax) for the examples in Figs. 1B and 1C. In the example shown in Fig. 1C and Fig. 1E, the plane of maximum height (Pmax) coincides substantially with the upper and lower inner edges (1027a, b) of the bone replacement element (102).

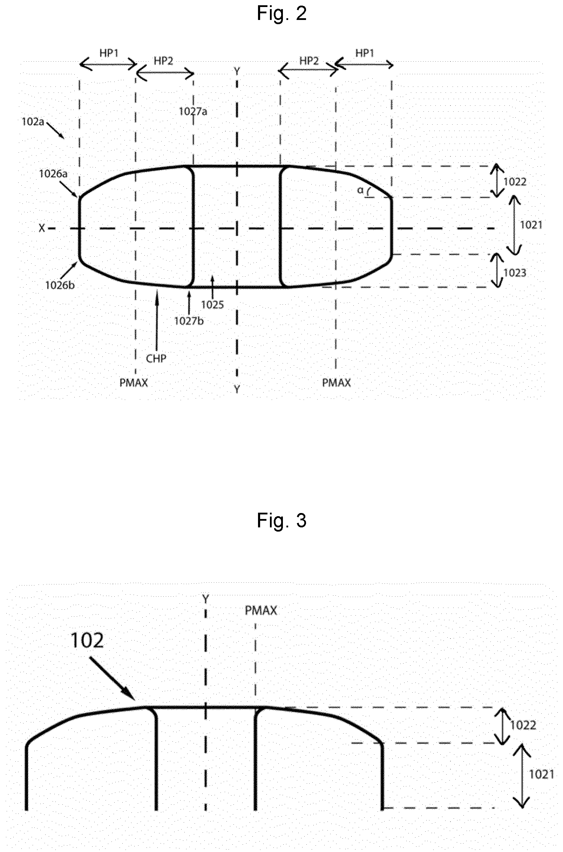

As referred to herein, the upper outer edge (1026a), lower outer edge (1026b), upper inner edge (1027a) and lower inner edges (1027b) refer to (dimensionally) circumferential edges of the bone replacement element as shown in the vertical cross-sections in Figures 1B-1C and Figure 2.

Thus, the height of the first protuberance having a height profile (HP1) increases from a minimum height (Hmin) that may be defined at a plane of minimum height of the protuberances located substantially at the upper outer edge (1026a) of the bone replacement element (102) to a maximum height (Hmax) at a point of maximum height (Hmax) (thus plane of maximum height Pmax), which point of (Hmax) may be defined or located between the upper outer edge (1026a) and the opening (1025) of the bone replacement element (102).

Thus, the height of the second protuberance having a height profile (HP1) increases from a minimum height (Hmin) that may be defined at a plane of minimum height of the protuberances located substantially at the lower outer edge (1026b) of the bone replacement element (102) to a maximum height (Hmax) at a point of maximum height (Hmax) (thus plane of maximum height Pmax), which point of (Hmax) may be defined or located between the upper outer edge (1026b) and the opening (1025) of the bone replacement element (102).

Thus, the maximum height of the first protuberances is between the upper outer edge (1026a) and the opening (1025), and the maximum height (Hmax) of the second protuberance is located between the lower outer edge (1026b) and the opening (1025).

The maximum height (Hmax) of each protuberance is greater than the minimum height (Hmin) of each protuberance.

In examples, the bone replacement element comprises a width (w) in the range of 0.1 to 15 mm. In examples, the bone replacement element comprises a height (h) in the range of 0.1 to 15 mm. In examples, the bone replacement element comprises a diameter (across a horizontal plane) between 3 and 15 mm. The bone replacement element may be provided in any size (width, height and height profile) and shape combination to suit common dental replacement needs or specific needs. For example, the bone replacement element may be provided in dimensions suitable for children or in dimensions suitable for adults.

In examples, a minimum width (horizontal) extension of the first height profile HP1 is 15% of the bone replacement element width. In examples, a minimum width extension of the first height profile HP1 is 15 mm.

In examples, a minimum height (vertical) extension of the first height profile HP1 is 15% of the bone replacement element height. In examples, a minimum height extension of the first height profile HP1 is 15 mm.

An interior surface 1025 of the bone replacement element 102 defines an opening 1025 extending through the entire length of bone replacement element 102. The opening (1025) may be substantially cylindrical and co-axial with the dental implant assembly (100) (i.e., having the same central longitudinal axis Y as the dental implant assembly 100). The supporting element 104 may be partially arranged within the opening 1025 and may be mechanically attached to the bone replacement element 102. The attachment between the supporting element 104 and the bone replacement element 102 may be effected through any suitable mechanical means, such as a screw or threading mechanism, in which case the interior surface 1026 is a threaded cylindrical surface. In examples, the supporting element 104 is at least partially threaded and an interior surface 1026 of the bone replacement elements is provided with a corresponding thread, thereby defining a threaded cylindrical interior surface, such that the bone replacement element 102 may be screwed onto the supporting element 102. Alternatively, the supporting element may be attached via adhesive means (not shown), or a combination thereof. Providing a bone replacement part and implant assembly may advantageously reduce handling and surgery time and may additionally reduce packaging and sterilization costs. Moreover, it may provide the bone graft with enhanced stability, in particular in comparison to implants consisting of a titanium screw, as it may reduce micromovement of the assembly after placement. Further, healing may be accelerated as the dental implant assemblies described herein may provide three sources of vascularization (i.e., periosteum, alveolar ridge (jaw surface), and implant treads (central vascularization)).

In the examples shown, the bone replacement element 102 is a monolithic (single) piece comprising a bioresorbable material. Alternatively, the bone replacement element 102 may comprise multiple parts which are joined during manufacture (each part of the multiple parts comprising a bioresorbable material).

The protuberances are three-dimensional, and their width extends substantially between an outer edge plane of the bone replacement element and the inner edge plane (or opening 1025) of the bone replacement element (102). The protuberances (1022, 1023) also extend circumferentially as they project from (opposing sides of) the cylindrical central portion 1021. The maximum circumference of the protuberances is always less than the maximum circumference of the central portion. Thus, the protuberances as provided for herein are never wider (that is, width as measured in a vertical cross-section plane) than the central portion. The protuberances may be provided in a variety of shapes, referred to herein as height profiles (HP). The height profiles may comprise height profile portions and/or combinations thereof as they are described with reference to the profile shape or view through a vertical cross-section reference plane. The protuberances may each comprise a first height profile portion (HP1) defined by gradually increasing height between the outer edges and a plane of maximum height. The first height profile portion (HP1) may correspond to substantially the entire radial extension of the protuberance in some examples (that is from the outer edge to the inner edge (or opening) of the bone replacement element). In other examples the first height profile portion (HP1) ends before reaching the inner edge of the bone replacement element, and the surface of the protuberance transitions into a different (second) height profile portion or section exhibiting a different height profile than that of the first height profile portion. In all examples, the end of the first profile height portion (HP1) is defined substantially at the point it reaches maximum height. The bone replacement element 102 comprises a height profile (HP1), alternatively referred herein as a height profile portion or section.

The first height profile portion (HP1) of the protuberances is such that, in all examples, an interior angle alpha (α) between the lateral cylindrical surface and the upper and lower termini (or vertical end) surfaces is greater than 90 degrees. Thus, the protuberance height starts at the outer edge of the bone replacement element and increases gradually towards the center of the bone replacement element until it reaches a maximum height. The maximum height of each of the protuberances may be substantially at the inner edge of the bone replacement element, or alternatively the maximum height may be at a point other than the inner edge of the bone replacement element. For example, the maximum height may be located near the inner edge (but not at the inner edge) of the bone replacement element.

In examples, the protuberances have a height of at least 1.5 mm. In examples, the protuberances have a height of substantially 1.5 mm. In examples, the protuberances have a height between 1 and 3 mm.

Figure 1B shows a vertical cross-section of the dental implant assembly 100 through a central longitudinal axis Y.

As can be seen in Figure 1B, the first protuberance 1022 defines the upper terminus surface A of the bone replacement element 102. The second (or lower) protuberance 1023 defines the lower terminus surface B. The protuberances extend substantially between the outer edge and the opening 1025 of the bone replacement element 102.

The protuberances extend substantially across the entire radial width of the bone replacement element 102. An interior angle alpha (α) between the lateral cylindrical surface of the central portion 1021 and the upper and lower termini (or vertical end surfaces), defined on a vertical cross-section plane (for example, as depicted in Fig. 1B), is greater than 90 degrees. Therefore, a transition between the lateral surface and the upper and lower surfaces of the bone replacement elements is relatively gradual, for example, in comparison with the fully cylindrical bone ring of the prior art. The protuberances as described herein therefore provide an external form or shape to the bone replacement element that is better suited to the anatomy of the dental bone and gingival tissue. The protuberances may thus enhance reception of the body of the implant assembly and enable more effective and accelerated healing than, for example, known graft implant bone osseointegration.

The first and second protuberances have a height as defined herein which defines the upper and lower terminus surfaces, respectively.

In examples, the first and second protuberances (1022, 1023) comprise a first height profile portion (HP1).

In examples, the first profile height portion (HP1) defines the entire height profile of the protuberance from outer edge to inner edge of the bone replacement element. A vertical cross-section of a bone replacement element 102 having such a height profile is shown in Fig. 1C, and a top view is shown in Fig. 1E.

In other examples, the protuberances may have a height profile that may be described in terms of first (HP1) and second (HP2) height profile portions, or multiple portions. Thus, portions of the protuberances as referred herein refer to height profiles. In cases where the first and second protuberances comprise first and second height profiles (HP1 and HP2 respectively) the first and second height profiles are (horizontally) adjacent to each other, such that the second height profile starts substantially at the end of the first height profile (as shown in the example of Fig. 2). The height profiles may, for example, be characterized by a uniform height (Huni) or by a gradual height increase or decrease. The height profiles and/or height profile portions may, for example, form a straight slope or a curved or arched profile.

Figure 1C shows a vertical cross-section of an example bone replacement element 102 having a particular height profile comprising a height profile portion (HP1), which defines the entire height profile of the protuberance.

In some examples, as shown in Figure 1D, the plane of maximum height (Pmax) is defined Pmax substantially at the respective inner edges of the bone replacement element. In such cases, the height of the protuberance increases substantially continuously from the respective outer edge to the respective inner edges, having maximum height substantially at the respective inner edge of the bone replacement element.

Figure 1D shows a top view of an example dental implant assembly (100) to illustrate example locations of the plane of maximum height (Pmax) of the example first protuberance as shown in Fig. 1B (seen in a side view through a vertical cross-section). In the example first protuberance shown in Fig. 1B a maximum height Hmax of the protuberance is not at the inner edge of the bone replacement element. The reference CH indicates an area of uniform height (Huni) of the protuberance 1022. Fig. 1E also shows the upper inner edge (1027a) and upper outer edge (1026a) of the bone replacement element. In all examples, a maximum circumference of the protuberance will be less than the maximum circumference of the central portion 1021. The horizontal width of the protuberances is thus less than the horizontal width of the central portion 1021. As the protuberances may be symmetrical, the plane of maximum height Pmax in a second protuberance 1023 in accordance with the height profile shown in Fig. 1B would be similarly located (as the one shown here for protuberance 1022) in a corresponding top view of the protuberance 1023. It should be noted that the figures are not drawn to (proportional) scale. The figures herein are for illustrative purposes to show the relative positioning of the elements.

Figure 1E shows a top view of an example dental implant assembly (100) to illustrate the plane of maximum height (Pmax) of the example first protuberance shown in Fig. 1C, and in particular for the example bone replacement element 102 with a height profile as shown in Fig. 1C (in which a maximum height Hmax of the protuberances is substantially at the inner edge of the bone replacement element). In all examples, a maximum circumference of the protuberance will be less than the maximum circumference of the central portion 1021. Thus, the maximum circumferential extension of the protuberances is always less than the maximum circumferential extension of the central portion 1021. Fig. 1E also shows the upper inner edge (1027a) and upper outer edge (1026a) of the bone replacement element. The horizontal width of the protuberances is thus less than the horizontal width of the central portion 1021.

Fig. 1F shows an example of the dental implant assembly 100 in use. In this example, the lower terminus surface rests on the dentate mandibular bone 200 while the dental implant assembly 100 may be surrounded on the upper surface by gingival tissue 300.

Surface transition areas and edges of the bone replacement element 102 are substantially gradual and may be rounded (as shown in the figures and as indicated, for example, by reference 1028 in Figure 1B). Thus, the bone replacement element shape may exhibit a substantially overall smooth external shape. The rounded edges or curved surface transitions may soften otherwise sharp or 'corner' edges between adjacent surfaces of the bone replacement element. Further, any height changes of the protuberances (increase or decrease in height) are such that no sharp corners are present in the exterior structure of the bone replacement element (that is, the part of the structure that may be exposed to or in contact with dental bone and gingival tissue). The overall shape of the bone replacement element may thus advantageously prevent damage to gingival tissue and enhance reception and integration of the bone replacement element by the gingival tissue.

As previously described, the internal angle alpha (α) between the cylindrical lateral surface and the upper and lower terminus surfaces is greater than 90 degrees. The transition at each 'corner' of the bone replacement element 102 is less abrupt than in known, e.g., bone replacement/gap filling grafts and this may advantageously provide accelerated healing and integration. This may be achieved by any number of protuberance shapes or height profiles, if the interior angle alpha (α) as defined herein between the lateral surface and the upper and lower surfaces, respectively, is greater than 90 degrees.

In use, the bone replacement part 102 occupies a gap in the dentate maxillary or in the dentate mandibular bone (specifically in the alveolar ridge). The bone replacement part 102 serves to reduce a discontinuity in the bone which may have resulted from blunt trauma or bone loss or other causes. As shown in Fig. 1F, in order to place the dental implant assembly 100 in a dental bone, a hole is drilled into the dentate maxillary or mandibular bone (where the part of the respective alveolar ridge may be missing or have a discontinuity) where the implant assembly is to be placed. The supporting element 104 is subsequently introduced in the hole, thereby functioning as an anchor of the dental assembly in the bone, and the bone replacement element 102 occupies at least a portion of an area of bone discontinuity. The lower terminus surface may be in substantial contact with bone matter, while the upper terminus surface may be in substantial contract with gingival tissue.

The first and second protuberances may be provided in any number of shapes or height profiles as described herein, which may also provide the advantages described with reference to the first example. Various examples of such protuberance shapes and/or height profiles are shown in Figures 2 to 5.

In examples, the protuberance further comprises a second height profile (HP2) which is a different height profile from the first height profile (HP1). The first and second height profiles (HP1, HP2) may be referred to interchangeably as first and second height profile portions or sections (HP1, HP2). Figure 2 shows an example bone replacement element 102a comprising a first height profile (HP1) and second height profile (HP2). The second height profile (HP2) may comprise a gradually increasing height (from a point of maximum height (Pmax) of the first profile section (HP1) towards the inner edge of the bone replacement element), a gradually decreasing height from the point of maximum height (Pmax) of the first profile section (HP1) towards the inner edge of the bone replacement element, or it may be a section of substantially uniform height (Huni).

In the example shown in Fig. 2, the second height profile (HP2) is a height profile of substantially uniform height thereby defining a substantially flat profile. That is, it defines a portion of the protuberances (1022, 1023) that has substantially uniform or constant height (Huni) throughout its entire extension.

Fig. 3 shows an example wherein the first height profile portion (HP1) is such that it defines an arc profile, and wherein the height of the protuberance at the inner edge of the bone replacement element is less than the maximum height of the protuberance. In this example, the plane of maximum height (Pmax) is not located at the inner edge(s) of the bone replacement element 102. The height profile in the example of Fig. 3 is such that it defines an arc with increasing height towards the center, which reaches a maximum height prior to reaching the inner edge(s) of the bone replacement element, and which then curves downward until reaching the inner edge(s) (which downward curve may be referred to as a second arc).

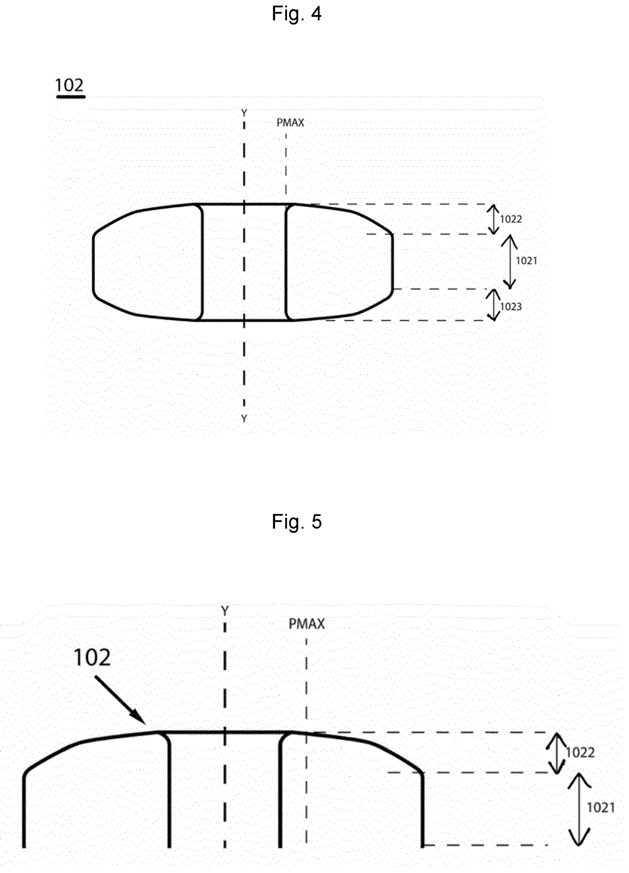

Fig. 4 shows an example, wherein the first height profile portion (HP1) is such that it defines an arc profile, and wherein the point of maximum height (Pmax) of the protuberances (1022, 1023) is substantially at the upper and lower inner edges (1027a,b), respectively, of the bone replacement element (102). In this example the entire height profile defines an arc.

Figure 5 shows an example, wherein the first height profile (HP1) of the first and second protuberances (1022, 1023) between the upper and lower outer edges (1026a,b), respectively, of the bone replacement element (102) and the upper and lower inner edges (1027a,b), respectively, of the bone replacement element (102) is such that it defines a substantially straight slope. In examples, the straight slope profile may, for example, comprise a bevelled or chamfered surface.

The first and second protuberances need not be symmetrical with respect to a central horizontal plane through the horizontal axis X. Thus, in examples, the first and second protuberances may have different height profiles. This may provide more versatility depending on the particular dental bone presentation to be treated such that the most suitable shape combination can be selected. For example, the upper protuberance may have a height profile according to one of the protuberances shown in the example of Figures 1B-1E and the lower protuberance of the same implant assembly may have a protuberance according to the shape or height profile of one of the protuberances shown in Figures 2-5. This may allow for a bone replacement element that is more suited to the shape of the bone discontinuity to be treated.

The dental implant assembly may be provided in different sizes, so that the more suitable size or proportional dimensioning for a particular presentation or bone discontinuity may be selected. In examples, an upper surface area of the screw may be even (or flush) with respect to an upper surface of the bone replacement element. In examples, an upper surface area of the screw may be lie lower with respect to an upper surface of the bone replacement element distance. The screw size may be related to the diameter of the bone replacement element. The of the screw may range between, for example, 3-6 mm.

In examples, the supporting element is arranged within the opening of the bone replacement element such that the upper surface (104a) of the supporting element lies vertically lower than the upper surface of the first protuberance, and the inner edge is substantially rounded.

In examples, the supporting element (104) is arranged in the opening (1025) of the bone replacement element such that an upper surface of the supporting element is even with the upper terminus surface of the bone replacement element.

In examples, a surface transition between an upper outer edge and the upper terminus surface of the bone replacement element, and between a lower outer edge and the lower terminus surface of the bone replacement element is substantially rounded.

In examples, the supporting element further comprises a socket in an upper portion thereof, the socket being configured to receive a dental prosthesis.

In examples, a tool for preparing a surface area of a dentate mandibular bone or of a dentate maxillary bone for a dental implant is provided, the tool comprising an attachment element for attaching the tool to a handling piece with actuation means at a first end of the attachment element, a bone surface shaping element rotatably attached around a second end of the attachment element, the second end being longitudinally opposite to the first end of the attachment element, wherein the shaping element is arranged to rotate upon actuation of the tool and is formed of a material having a material hardness of 10 or greater on the Mohs scale of mineral hardness, and an elongated tool positioning element projecting from the center of the lower surface of the bone shaping element for insertion into a bone to be prepared for a dental implant.

In examples, the lower surface of the bone shaping element has a dome shape.

In examples, an upper surface of the bone shaping element is arranged on a disc-shaped support.

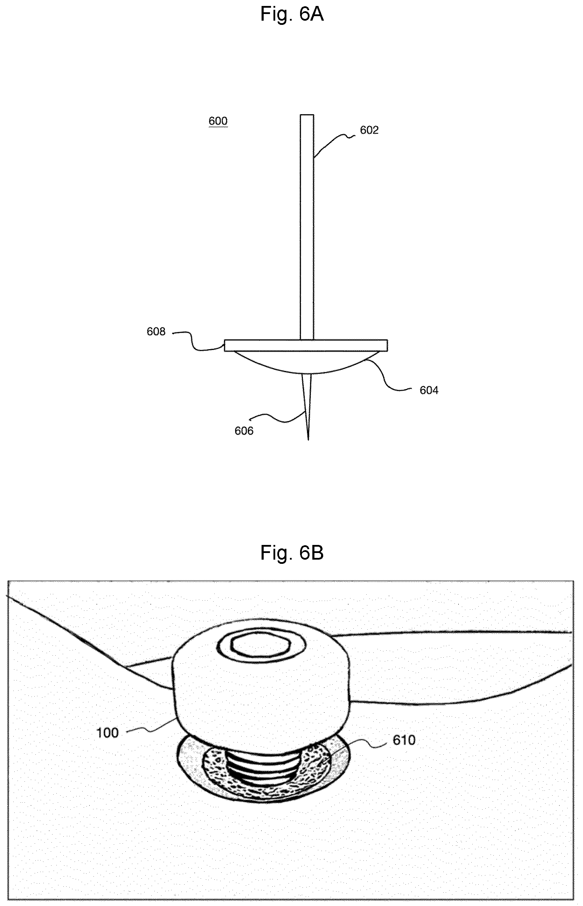

Fig. 6A shows a front view of a tool 600 according to an aspect of the invention for preparing a bone surface for placement of a dental implant. In the example, the tool bone preparing element is shaped and sized to match the upper and/or lower terminus surfaces of the example dental assembly 100. Thus, a tool according to the invention may be provided, for example, for example, in a dome shape, a curved shape, or conical shape (that is, in any shape that may be suitable for a dental assembly).

Fig. 6B is a schematic view of a dentate mandibular bone area 610 which has been prepared for insertion of a bone implant assembly 100 according to the invention. Actuation means cause the diamond dome to rotate as the operator displaces the dome onto the bone (which may be, for example, a dentate maxillary bone or a dentate mandibular bone).

A hole may first be drilled into the bone to be treated. The hole may serve as engagement for positioning element to be inserted thereby providing stability and a defined surface area to be prepared (e.g., sanded or grinded) for subsequent positioning of the implant.

In a further aspect of the invention, a kit of parts is provided comprising a bone implant assembly and a tool for preparing a dental bone area for implanting of the bone implant assembly.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. Dental implant assembly comprising
a supporting element,
and
an annular bone replacement element attached to the supporting element surrounding a portion thereof,
wherein the annular bone replacement element is comprised of a bioresorbable material and comprises
a central portion defining a substantially cylindrical lateral surface,
a first protuberance defining an upper terminus surface of the bone replacement element and extending between an upper outer edge and an upper inner edge of the central portion,
a second protuberance defining a lower terminus surface of the bone replacement element and extending between a lower outer edge and a lower inner edge of the central portion, and
a substantially cylindrical opening extending through the central portion and the first and second protuberances, wherein the supporting element is partially arranged inside the opening,
wherein the first and second protuberances comprise a first height profile defined by a height which increases gradually from a minimum height at substantially the upper and lower outer edges, respectively, of the bone replacement element to a maximum height at a point of maximum height of the first profile between the upper and lower outer edges, respectively, and the opening of the bone replacement element,
and
wherein a maximum circumference of the central portion is greater than a maximum circumference of each of the first and second protuberances.

2. Dental implant assembly of claim 1, wherein the first height profile portion is such that it defines an arc profile, and wherein the height of the protuberance at the inner edge of the bone replacement element is less than the maximum height of the protuberance.

3. Dental implant assembly according to claim 1, wherein the first height profile portion is such that it defines an arc profile, and wherein the point of maximum height of the protuberances is substantially at the upper and lower inner edges, respectively, of the bone replacement element.

4. Dental implant assembly according to claim 1, wherein the first height profile of the first and second protuberances between the upper and lower outer edges, respectively, of the bone replacement element and the upper and lower inner edges, respectively, of the bone replacement element is such that it defines a substantially straight slope.

5. Dental implant assembly according to claim 1,
wherein the first and second protuberances comprise a second height profile,
wherein the second height profile is defined between the first height profile and the upper and lower inner edges respectively, of the bone replacement element,
wherein the second height profile is a uniform height profile, thereby defining a substantially flat profile between the point of maximum height of the first profile and a point defined substantially at the upper and lower inner edges, respectively, of the bone replacement element, and
wherein the height of the second height profile portion is equal to a maximum height of the first and second protuberances.

6. Dental implant assembly of claim 5, wherein the first height profile portion is such that it defines an arc profile between the upper and lower outer edges of the bone replacement element and the plane of maximum height.

7. Dental implant assembly of claim 5, wherein the first height profile portion is such that it defines a substantially straight slope profile between the upper and lower outer edges of the bone replacement element and the point of maximum height.

8. Dental implant assembly according to any of the preceding claims, wherein the supporting element is arranged within the opening of the bone replacement element such that the upper surface of the supporting element lies vertically lower than the upper surface of the first protuberance, and the inner edge is substantially rounded.

9. Dental implant assembly according to any of the preceding claims, wherein the supporting element is arranged in the opening of the bone replacement element such that an upper surface of the supporting element is even with the upper terminus surface of the bone replacement element.

10. Dental implant assembly according to any of the preceding claims, wherein a surface transition between an upper outer edge and the upper terminus surface of the bone replacement element, and between a lower outer edge and the lower terminus surface of the bone replacement element is substantially rounded.

11. Dental implant assembly according to claim 1, wherein the supporting element further comprises a socket in an upper portion thereof, the socket being configured to receive a dental prosthesis.

12. Tool for preparing a surface area of a dentate mandibular bone or of a dentate maxillary bone for a dental implant, the tool comprising:
an attachment element for attaching the tool to a handling piece with actuation means at a first end of the attachment element,
a bone surface shaping element rotatably attached around a second end of the attachment element, the second end being longitudinally opposite to the first end of the attachment element, wherein the shaping element is arranged to rotate upon actuation of the tool and is formed of a material having a material hardness of 10 or greater on the Mohs scale of mineral hardness,
and
an elongated tool positioning element projecting from the center of the lower surface of the bone shaping element for insertion into a bone to be prepared for a dental implant.

13. Tool according to claim 12, wherein the lower surface of the bone shaping element comprises a dome shape.

14. Tool according to claim 12 or claim 13, wherein an upper surface of the bone shaping element is arranged on a disc-shaped support.

15. Kit of parts comprising a dental implant assembly according to any of claims 1 to 11, and a tool according to any of claims 12 to 14.
